Europäisches Patentamt

European Patent Office

Office européen des brevets

(11) Numéro de publication: **0 317 435 B1**

# (12) FASCICULE DE BREVET EUROPEEN

(45) Date de publication de fascicule du brevet: **17.06.92**  (51) Int. Cl.⁵: **H05B 3/78**, H02H 5/10

(21) Numéro de dépôt: **88402889.5**

(22) Date de dépôt: **17.11.88**

(54) **Elément électrique isolé chauffant à dispositif de sécurité détectant la défaillance de l'isolement électrique.**

(30) Priorité: **19.11.87 FR 8715997**

(43) Date de publication de la demande:
**24.05.89 Bulletin 89/21**

(45) Mention de la délivrance du brevet:
**17.06.92 Bulletin 92/25**

(84) Etats contractants désignés:
**AT BE CH DE ES FR GB GR IT LI LU NL SE**

(56) Documents cités:
**DE-C- 957 965
FR-A- 2 314 502
GB-A- 1 373 093
US-A- 4 054 934
US-A- 4 103 319**

(73) Titulaire: **André, David**
**La Baloudière Cutry**
**F-54720 Lexy(FR)**

(72) Inventeur: **André, David**
**La Baloudière Cutry**
**F-54720 Lexy(FR)**

(74) Mandataire: **Chevallier, Robert Marie Georges et al**
**Cabinet BOETTCHER 23, rue La Boétie**
**F-75008 Paris(FR)**

## Description

L'invention se rapporte à un élément chauffant qui comprend un fil résistant électrique chauffant disposé à l'intérieur d'une première enveloppe métallique elle-même contenue dans une seconde enveloppe fermée à une extrémité. Cette seconde enveloppe peut être en métal ou en verre.

Les éléments chauffants de ce type concernés par l'invention sont destinés à être employés pour le chauffage d'un fluide, généralement de l'eau,contenu à l'intérieur d'une enceinte étanche. On peut citer comme exemple d'une telle enceinte les ballons d'eau chaude, les radiateurs de chauffage à eau ou à huile, les sèche-serviettes, etc..., ces radiateurs et sèche-serviettes pouvant être utilisés isolément ou pouvant faire partie d'un réseau de chauffage.

Pour que la sécurité des utilisateurs soit assurée, la réglementation prévoit en général que le corps des appareils doit être relié à la terre. Il est possible de ne pas relier les appareils à la terre mais,dans ce cas, l'isolement électrique de la partie électrique doit être d'une qualité renforcée, souvent réalisée par deux couches distinctes superposées d'isolement, que la réglementation définit comme double isolement.

Les éléments chauffants concernés par l'invention sont du type à double isolement. Quand ils sont en cours d'utilisation, la seconde enveloppe, ou enveloppe extérieure, qui est généralement un tube, de chaque élément chauffant traverse la paroi de l'enceinte pour être plongée dans le fluide sur la plus grande partie de sa longueur, avec son extrémité fermée située à l'intérieur, et son extrémité ouverte située du côté de l'extérieur pour permettre le raccordement de la résistance électrique chauffante. A sa traversée de la paroi de l'enceinte l'enveloppe extérieure est contenue dans une bride de montage qui assure à la fois son maintien en position et l'étanchéité nécessaire par rapport à la paroi de l'enceinte.

l'emploi d'un tube en verre comme enveloppe extérieure d'un élément chauffant comporte plusieurs avantages qui sont bien connus des spécialistes et qu'il n'est pas nécessaire d'énumérer ici en totalité. On rappellera seulement que le verre qui compose le tube est choisi pour être transparent au rayonnement infrarouge; de ce fait, le fluide est chauffé directement par les rayons infrarouges qui traversent le tube en n'échauffant celui-ci que très peu de sorte que sa température reste de l'ordre de 60 à 70.C. Cette température modérée, ainsi que la surface lisse du verre, ne sont pas favorables à la formation de dépôts gênants sur le tube en verre.

Bien que le tube en verre apporte des avantages appréciables, il a aussi un inconvénient important qui découle de sa relative fragilité. Il peut se briser, ou même seulement se fissurer, à l'intérieur de l'enceinte étanche et se remplir du fluide à chauffer. Dans un tel cas, la qualité de l'isolement électrique initial n'est plus conservée.

Quand l'enveloppe extérieure est métallique, sa rupture ou sa fissuration à la suite d'un choc sont beaucoup moins à craindre, mais il peut arriver néanmoins que la qualité de l'isolement électrique s'affaiblisse avec le temps.

Quand les deux niveaux d'isolement sont simultanément insuffisants, il existe un danger grave pour toute personne qui se mettrait en contact direct avec l'enceinte étanche ou avec des tuyauteries ou des robinets reliés à cette dernière, sans être protégée par un moyen d'isolement électrique. En effet, un courant de quelques milliampères fait courir un risque d'électrocution à une personne; certaines normes limitent déjà à 6 mA l'intensité du courant de fuite auquel une personne peut être exposée accidentellement.

On connait par les documents US-A-4 103 319 et GB-A-1 373 093 des éléments chauffants composés d'un tube à l'intérieur duquel sont disposés d'une part une résistance électrique chauffante, d'autre part au moins une électrode supplémentaire faisant partie d'un circuit de sécurité comprenant soit une seconde électrode supplémentaire, soit la résistance électrique chauffante servant de seconde électrode pour couper l'alimentation électrique en cas d'entrée d'eau dans le tube.

Ces éléments chauffants sont conçus pour être installés dans des conteneurs de fluide à chauffer de grandes dimensions (cuve d'électrolyse ou aquarium) avec lesquels l'encombrement extérieur de la section droite de ces éléments n'est pas limitée par une valeur critique.

Or, les éléments chauffants concernés par l'invention sont destinés à être employés à la façon d'un tube plongeur chauffant de diamètre inférieur ou égal à 16 m/m devant être logé aisément dans presque tous les corps des radiateurs fonte, aluminium, ou acier existants par un simple vissage dans un orifice taraudé de diamètre 19 mm environ. L'adoption des solutions décrites dans les brevets précités conduirait à une dimension trop importante de l'élément chauffant, en sens transversal.

L'invention a donc pour but principal de perfectionner les éléments chauffants du type défini plus haut en y incorporant des moyens de sécurité capables de détecter l'affaiblissement de l'isolement électrique entre la première enveloppe métallique et le fil résistant électrique chauffant qu'elle contient ainsi que l'entrée du fluide chauffé à l'intérieur du tube en verre quand la seconde enveloppe extérieure est un tube en verre.

L'emploi envisagé des éléments chauffants de l'invention impose dans certaines circonstances une contrainte supplémentaire qui est le silence de fonctionnement, étant donné que ces éléments chauffants peuvent être montés sur des radiateurs ou sur des sèche-serviettes situés dans des chambres à coucher ou dans des chambres d'hôtel. En conséquence les thermostats électromécaniques de puissance du circuit de régulation de la température du fluide chauffé doivent être remplacés par un interrupteur électronique ou relais statique tel qu'un TRIAC. Mais on sait qu'un tel composant nécessite un refroidissement important que l'on réalise couramment à l'aide d'un radiateur à ailettes qui disperse dans l'air environnant les calories produites par le composant. Cette solution conduit à un encombrement général peu acceptable des circuits électriques qui accompagnent les éléments chauffants.

L'invention a pour but secondaire de parvenir à des éléments chauffants du type défini plus haut dont le fonctionnement est silencieux et dont l'interrupteur électronique de puissance du circuit de régulation n'exige pas de moyens encombrants pour son refroidissement.

Dans un élément chauffant, destiné à servir au chauffage d'un fluide conducteur de l'électricité contenu dans une enceinte à paroi étanche, comprenant un fil résistant électrique chauffant réuni à chacune de ses extrémités à un conducteur d'alimentation électrique respectif, une première enveloppe intérieure métallique contenant ce fil résistant chauffant inclus dans une matière réfractaire isolante électriquement, une seconde enveloppe extérieure ayant une extrémité fermée et une extrémité ouverte et contenant la première enveloppe intérieure métallique, un circuit de sécurité à deux électrodes associées à la première enveloppe pour commander la coupure de l'alimentation électrique en cas d'isolement insuffisant dudit élément chauffant, l'une de ces électrodes étant constituée par le fil résistant électrique chauffant , une bride de montage pour le montage étanche de cet élément chauffant à travers une paroi de ladite enceinte, cette bride contenant l'extrémité ouverte de la première enveloppe et permettant le raccordement électrique desdits conducteurs à un réseau d'alimentation électrique, conformément à l'invention l'autre électrode du circuit de sécurité est constituée par la première enveloppe intérieure métallique.

Selon un mode de réalisation de l'invention, la seconde enveloppe extérieure est métallique et elle contient une matière réfractaire isolante électriquement dans laquelle est incluse la première enveloppe intérieure.

Selon un autre mode de réalisation de l'invention la seconde enveloppe extérieure est en verre; l'élément chauffant comprend un circuit de sécurité supplémentaire ayant deux électrodes dont l'une est la première enveloppe intérieure métallique et l'autre est une électrode incluse dans le volume limité par la bride de montage, la première enveloppe intérieure et la seconde enveloppe extérieure.

Chacun des deux circuits de sécurité a pour sa connexion à l'électrode constituée soit par le fil résistant chauffant, soit par la première enveloppe intérieure métallique respectivement, un fil conducteur qui est relié aux deux conducteurs d'alimentation du fil résistant chauffant à l'aide de deux diodes, le sens de conduction des diodes de l'un des circuits de sécurité étant l'inverse de celui des diodes de l'autre circuit de sécurité.

Dans les circonstances où le silence de fonctionnement est désiré et où un interrupteur électronique tel qu'un triac est utilisé, conformément à l'invention, la bride de montage est en matière conductrice de la chaleur et elle comprend un logement intérieur dans lequel est disposé un interrupteur électronique mis en relation de transmission de chaleur avec cette bride de montage.

Quand les conducteurs d'alimentation électrique du fil résistant chauffant sont alimentés à travers un relais principal monostable commandé par un relais pilote bistable à bouton de MARCHE et d'ARRET et quand un circuit de sécurité comprend un fusible sur un fil d'alimentation électrique du relais pilote bistable, selon l'invention le circuit de sécurité qui a le fil résistant électrique chauffant comme électrode est branché en parallèle au bouton d'ARRET cependant que le circuit de sécurité qui comprend l'électrode incluse dans le volume limité par la bride de montage, la première enveloppe intérieure métallique et la seconde enveloppe extérieure, est branché en parallèle sur le fusible.

Avantageusement, l'ensemble des circuits électriques et électroniques associés à cet élément chauffant sont groupés, à l'exception du triac, dans un boîtier ayant une paroi à surface extérieure contre laquelle est appliquée la face arrière de la bride de montage, avec une ouverture ménagée dans cette paroi pour l'introduction à l'intérieur du boîtier de la partie extrême arrière de l'élément chauffant, une autre paroi du même boîtier ayant une surface extérieure sur laquelle se trouvent les divers moyens de commande et de contrôle nécessaires au fonctionnement de l'élément chauffant.

On donnera maintenant, uniquement à titre d'exemple, une description de plusieurs modes de réalisation d'un élément chauffant électrique conforme à l'invention. On se reportera aux dessins annexés dans lesquels :

- la figure 1 est une vue en coupe par un plan passant par l'axe d'un premier exemple d'un élément chauffant selon l'invention, à enveloppe extérieure métallique;

- la figure 2 est une vue analogue à la figure 1 et se rapporte à un deuxième exemple d'un élément chauffant selon l'invention, à enveloppe extérieure en verre et à interrupteur électronique;

- la figure 3 est un schéma électrique du circuit électrique d'alimentation et de contrôle de l'élément chauffant de la figure 2 montrant particulièrement les circuits de sécurité électrique conformes à l'invention;

- la figure 4 est une vue d'ensemble en partie en coupe d'un élément chauffant complet montrant un exemple préféré de réalisation de l'invention.

Les exemples représentés et décrits sont ceux d'un élément chauffant individuel, à alimentation électrique monophasée qui se monte sur une enceinte de fluide à chauffer (non représentée) à l'aide d'une bride de montage conçue pour se visser dans un trou taraudé prévu dans la paroi de cette enceinte. Toutefois, il est clair que l'invention n'exige pas l'emploi de ce moyen de montage; elle peut être utilisée aussi avec d'autres moyens équivalents de montage.

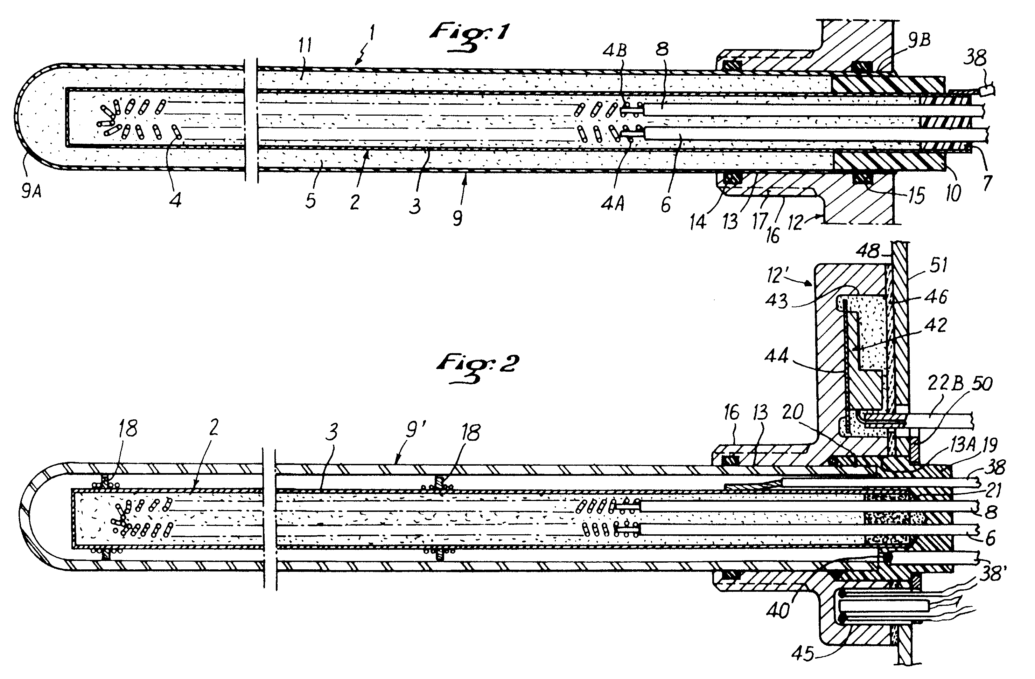

Sur la figure 1, l'élément chauffant désigné par la référence générale 1 comprend une résistance électrique blindée 2 de construction classique bien connue. Une telle résistance blindée 2 a une enveloppe métallique 3 à l'intérieur de laquelle est disposé un fil résistant électrique chauffant 4. Ce dernier est inclus dans une matière réfractaire isolante électrique telle que de la magnésie en poudre 5, compactée à l'intérieur de l'enveloppe métallique 3, ainsi qu'il est connu. Dans le présent exemple une première extrémité 4A du fil résistant 4 est réunie à un conducteur électrique 6 qui s'étend en dehors de l'enveloppe métallique 3 en traversant un élément obturateur 7 de cette enveloppe qui en obture hermétiquement une extrémité. La seconde extrémité 4B du fil résistant 4 est réunie à un conducteur électrique 8 qui s'étend de la même façon en dehors de l'enveloppe métallique 3.

La résistance blindée classique qui vient d'être décrite est contenue à l'intérieur d'une seconde enveloppe extérieure métallique 9, par exemple en acier inoxydable, ayant une extrémité fermée 9A et une extrémité ouverte 9B. Cette extrémité ouverte 9B est obturée hermétiquement par une bague 10 en matière isolante (polyamide, polytétrafluoréthylène, etc...). Cette bague 10 a une ouverture traversante centrale par laquelle passe, avec serrage, la première enveloppe intérieure 3 qui contient le fil résistant chauffant 4. Ainsi les fils 6,8 sont accessibles pour leur raccordement électrique.

La seconde enveloppe extérieure 9 contient aussi une matière réfractaire isolante électrique 11 dans laquelle est incluse la première enveloppe 3.

La partie extrême de la seconde enveloppe extérieure 9 qui est obturée par la bague 10 est tenue dans une bride de montage 12. Celle-ci a une ouverture de passage convenable 13 avec deux joints toriques 14,15 pour le passage étanche de la seconde enveloppe 9. En outre, la bride de montage 12 a un bossage 16 qui entoure coaxialement l'ouverture de passage 13 et qui a un filetage extérieur 17. Grâce à ce filetage on peut monter facilement l'élément chauffant à travers la paroi d'une enceinte, simplement en l'introduisant dans un trou taraudé en correspondance avec le filetage 17.

On se reportera maintenant à la figure 2 pour décrire un autre exemple d'élément chauffant conforme à l'invention. Dans cet élément il existe une première enveloppe intérieure 2 identique à celle de l'élément de la figure 1. On ne la décrira pas à nouveau. Il existe aussi une seconde enveloppe extérieure 9' mais celle-ci est en verre. Comme il s'agit d'une matière isolante, l'enveloppe extérieure 9' ne contient pas de matière réfractaire isolante électriquement mais seulement des rondelles isolantes 18 qui garantissent le centrage convenable de l'enveloppe intérieure 2 dans cette enveloppe extérieure 9'.

La bride de montage 12' pourrait être identique à celle qui fait partie de l'élément chauffant de la figure 1 mais en raison de la fragilité du verre, il est préférable de prévoir dans l'ouverture de passage 13 à l'opposé du bossage 16 une partie 13A à plus grand diamètre. Cette partie élargie 13A contient partiellement une douille 19 en matière isolante électriquement et relativement souple comme du polytétrafluorothylène. Dans cette douille 19 sont prévus pour s'ouvrir du côté du bossage 16 un premier logement 20 qui reçoit la partie extrême ouverte de la seconde enveloppe extérieure en verre 9' et un second logement 21 qui reçoit la partie extrême fermée par l'élément obturateur 7 de la première enveloppe 2. En outre la douille 19 est percée de trous pour laisser passer les conducteurs électriques 6 et 8. Comme précédemment des joints toriques assurent l'étanchéité entre la bride de montage 12' et l'enveloppe extérieure 9'.

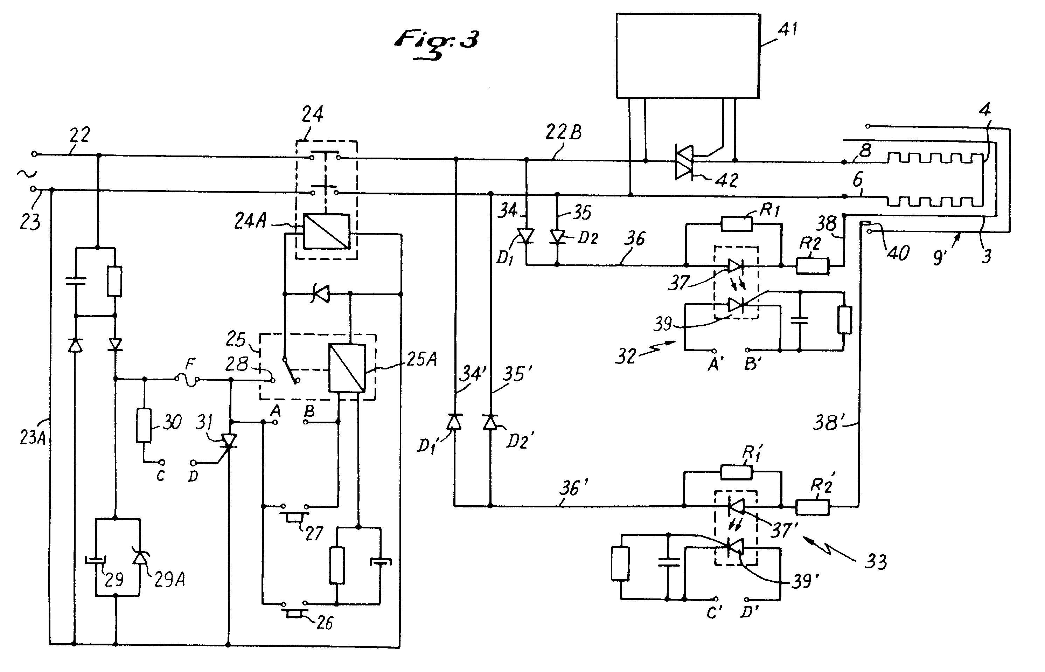

La figure 3 montre que l'alimentation électrique de l'élément chauffant se fait par l'intermédiaire d'un relais principal monostable 24 dont les bornes de sortie sont reliées respectivement d'une part au conducteur 6, d'autre part au conducteur 8. Une borne de la bobine 24A du relais 24 est réunie directement par un fil 23A à un fil d'alimentation 23. L'autre borne de la bobine 24A est alimentée par l'intermédiaire d'un relais pilote bistable 25 ayant une bobine 25A reliée de façon connue à un bouton MARCHE 26 et à un bouton ARRET 27. Le contact fixe 28 du relais bistable 25 est relié au fil d'alimentation 22 du réseau électrique par l'intermédiaire d'un fusible F. En parallèle à ce fusible F est monté un condensateur 29 associé à une diode Zener 29A, dont le rôle sera expliqué plus loin; un autre circuit comprenant une résistance 30, deux bornes de raccordement C-D et un thyristor 31 est branché aussi en parallèle au fusible F, ce thyristor 31 faisant donc partie aussi du circuit qui comprend le condensateur 29.

En outre, il est prévu en parallèle au bouton d'arrêt 27 deux bornes de raccordement A-B.

Les bornes A-B et C-D sont représentées sur la partie gauche de la figure 3 uniquement pour la commodité et la clarté du dessin, en réalité les bornes A-B sont reliées ou confondues avec les bornes de raccordement A'-B' qui font partie d'un premier circuit de sécurité 32 cependant que les bornes C-D sont reliées ou confondues avec les bornes de raccordement C'-D' qui font partie d'un second circuit de sécurité 33 visibles sur la partie droite de la figure 3.

Le circuit de sécurité 32 comprend, à partir de chacun des fils d'alimentation 22, 23 en aval du relais principal 24, deux fils 34, 35 sur chacun desquels se trouve une diode D1,D2 respectivement à la sortie desquelles un unique fil 36 conduit à une diode photo-émissive 37 accompagnée d'une résistance en parallèle R1 et suivie d'une résistance en série R2 après laquelle un fil 38 aboutit à une électrode de détection de sécurité qui est constitué par la première enveloppe intérieure 3 On voit sur la figure 1 le fil 38 fixé à la partie extrème de l'enveloppe intérieure 3 qui est en saillie au-delà de la bague d'obturation 10.

Sur la figure 2, comme l'enveloppe intérieure 3 n'est pas saillante en dehors de la douille 19, le fil 38 traverse cette dernière et il est fixé à l'enveloppe intérieure 3 dans l'intervalle qui existe entre celle-ci et l'enveloppe extérieure 9'.

Sur la figure 3, les fils 34,35 sont réunis par l'intermédiaire des conducteurs 6,8 au fil résistant chauffant 4 qui constitue aussi une électrode de détection de sécurité. A la diode photo-émissive 37 est associé un photothyristor 39 qui devient conducteur quand il est influencé par la diode 37.

Un tel circuit de sécurité 32 entre en action quand l'isolement du fil résistant chauffant 4 descend à une valeur de 40 kΩ environ, à laquelle correspondrait un courant de 6 mA environ (sous 230 V) entre ce fil résistant chauffant 4 et la première enveloppe intérieure 3. Cet effet se produit en fonction de la valeur des résistances R1 et R2 que l'on détermine aisément par réglage au cours d'essais.

Quand le photothyristor 39 devient conducteur, les points A et B sont réunis directement, ce qui équivaut à l'enfoncement du bouton d'ARRET 27, de sorte que le relais principal 24 s'ouvre.

Le circuit de sécurité 33 est identique au circuit de sécurité 32; on a donc utilisé les mêmes références numériques avec le signe ' et au lieu de le décrire à nouveau on fera remarquer les différences : le fil 38' est relié à une électrode 40 qui se trouve exposée dans le volume limité (sur la figure 2) par l'enveloppe extérieure 9', l'enveloppe intérieure 3 et la douille 19. On voit sur cette figure 2 le fil 38' qui traverse la douille 19 et qui aboutit à une électrode distincte 40 contenue dans une gorge annulaire creusée dans la face intérieure de la douille 19 autour de l'enveloppe intérieure 3; l'électrode 40 est interrompue juste pour le passage du fil 38.

En outre, les sens de conduction des diodes D1', D2' sur les fils 34',35' sont inversés par rapport à celui des diodes D1,D2 sur les fils 34,35. On remarquera que dans ce circuit de sécurité 33 l'autre électrode est encore la première enveloppe intérieure métallique 3 par l'intermédiaire des diodes D1,D2, des résistances R1,R2 et des fils 34,35,36, 38, du circuit de sécurité 32.

Dans le circuit de sécurité 33, les valeurs des résistances R'1 et R'2 sont fixées au cours d'essais de réglage afin que le circuit entre en action quand la valeur de la résistance entre l'électrode 40 et l'enveloppe intérieure 3 constituant l'autre électrode descend en dessous de 100 kΩ, ce qui se produit quand de l'eau pénètre à l'intérieur de l'enveloppe extérieure 9', risque particulièrement à craindre puisque cette enveloppe extérieure 9' est en verre. Le circuit de sécurité 33 est donc spécialement utile pour la détection de toute rupture ou fêlure laissant pénétrer de l'eau dans le volume inclus entre les deux enveloppes. Quand ceci se produit, le courant peut circuler en passant par les diodes D1,D2, l'enveloppe intérieure 3, l'électrode 40 et les diodes D1',D2'. Le photothyristor 39' devient alors conducteur, ce qui fait que les bornes C,D sont reliées directement. Le thyristor 31 reçoit à travers la résistance 30 une tension qui le rend conducteur de sorte que le courant venant du fil d'alimentation 22 traverse directement le fusible F et le thyristor 31 pour parvenir au fil 23A. Dans le cas où ce courant ne serait pas suffisant pour faire fondre rapidement le fusible F, on voit que le condensateur 29 peut alors se décharger à travers le thyristor 31 devenu conducteur et le fusible F. Ce dernier fond instantanément et le relais pilote 25A s'ouvre en provoquant l'ouverture du relais principal 24.

On se dispense d'utiliser le circuit de sécurité 33 quand l'enveloppe extérieure 9 est métallique. On remarquera que, dans ce cas, si de l'eau pénétrait entre les deux enveloppes extérieure 9 et inférieure 3, dès qu'une mise à la masse de l'élément chauffant se produirait, d'une façon quelconque, par exemple par le contact d'un utilisateur, le courant circulerait à travers la diode 37, en provenance des fils d'alimentation 22, 23, et le circuit de sécurité 32 agirait comme expliqué plus haut pour ouvrir le relais principal 24.

Un élément chauffant du type de celui de l'invention est associé à des circuits de réglage, de régulation et de limitation de l'échauffement qui sont connus en soi et représentés sur la figure 3 par un simple rectangle 41. Ces circuits, et surtout le circuit de régulation de la température du fluide chauffé, comprennent des relais ou thermostats électro-mécaniques qui sont toujours bruyants. Pour obtenir le silence souhaitable, il est prévu d'utiliser un interrupteur électronique 42 appelé triac représenté sur la figure 3 sur la ligne d'alimentation 22B qui, après le relais principal 24, arrive au conducteur 8.

Conformément à l'invention, pour obtenir le refroidissement important exigé par le triac 42, il est prévu de donner à la bride de montage 12′ - (figure 2) une extension en sens transversal par rapport aux enveloppes 3 et 9′ suffisante pour pouvoir creuser dans son épaisseur un logement 43. Le triac 42 est mis en place dans ce logement 43 en relation de conduction calorifique avec la matière métallique, de préférence du laiton, qui constitue la bride de montage 12′.

Pour une raison d'isolement électrique, il est possible de noyer le triac 42 dans un bloc de résine et d'interposer entre ce bloc et la bride 12′ une ou deux feuilles 44 isolantes électriquement et conductrices de la chaleur, par exemple en mica, sans compromettre le refroidissement nécessaire du triac 42.

Sur la figure 2, un autre logement 45 plus petit est représenté pour le montage d'un limiteur thermostatique de surchauffe et de thermistances faisant partie du circuit de régulation.

Les logements 43 et 45 sont ouverts sur la face arrière de la bride de montage 12′. Pour l'utilisation, une feuille 46 d'isolation thermique est placée contre cette face arrière.

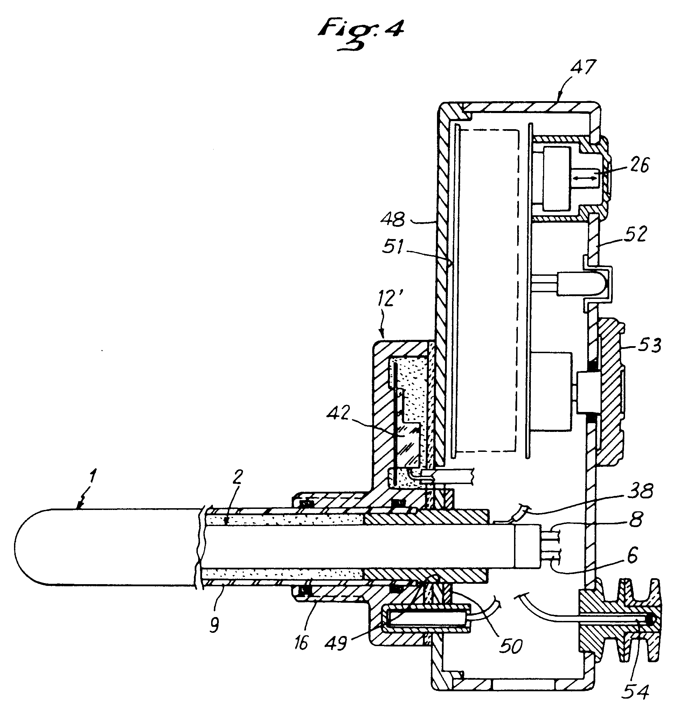

Les circuits électriques de la figure 3 peuvent être installés de toute manière connue habituelle. Toutefois, dans le cadre de l'invention il est préféré comme le montre la figure 4 de grouper l'ensemble des circuits électriques et électroniques dans un boîtier 47 ayant une paroi à surface extérieure 48 contre laquelle est appliquée la face arrière (éventuellement garnie de la feuille d'isolation thermique 46) de la bride de montage 12′, avec une ouverture 49 ménagée dans cette paroi pour l'introduction dans ce boîtier 47 de la partie extrême arrière de l'élément chauffant. Celui-ci est fixé à l'aide d'une contre-plaque 50 s'appliquant contre la surface intérieure 51 de la même paroi, autour de l'élément chauffant; des vis (non représentées) traversent cette contre-plaque 50, la paroi du boîtier, la feuille d'isolation thermique 46 et se vissent dans la bride de montage 12′.

Une autre paroi du boîtier, de préférence la paroi opposée, a une surface extérieure 52 sur laquelle se trouve les divers moyens de commande et de contrôle nécessaires au fonctionnement de l'élément chauffant, comme les boutons de MARCHE 26 et d'ARRET, une lampe témoin, un bouton de réglage 53 faisant partie du circuit 41 de la figure 3, un détecteur 54 de la température du milieu environnant, etc...

Sur la figure 4, le boîtier 47 est équipé de l'élément chauffant de la figure 1 monté à l'aide de la bride 12′ de la figure 2; l'élément chauffant de cette figure 2 peut, bien entendu, être pourvu du boîtier 47 ainsi qu'il est indiqué sur cette figure par la représentation d'une partie de la paroi de ce boîtier avec la contre-plaque 50.

Bien entendu, la bride de montage 12 visible sur la figure 1 peut être utilisée pour le montage d'un élément chauffant comme celui de la figure 1 ou de la figure 2 sans triac logé dans cette bride et sans le boîtier 47.

## Revendications

1. Elément chauffant à circuits électroniques de commande, de contrôle et de régulation pour le chauffage d'un liquide contenu dans une enceinte à paroi étanche, comprenant un fil résistant électrique chauffant (4) réuni à ses extrémités à des conducteurs (6,8) d'alimentation électrique, une première enveloppe intérieure métallique (3) contenant ce fil résistant (4) inclus dans une matière réfractaire isolante électriquement (5) et laissant accessibles les conducteurs (6,8) à une de ses extrémités, une seconde enveloppe extérieure (9,9′) ayant une extrémité fermée (9A) et une extrémité ouverte (9B) obturée par un moyen d'obturation (10,19) et contenant la première enveloppe intérieure métallique (3), un circuit de sécurité (32) à deux électrodes pour commander la coupure de l'alimentation électrique des conducteurs (6,8) en cas d'isolement électrique insuffisant de cet élément chauffant, l'une de ces électrodes étant constituée par le fil résistant électrique chauffant (4), comprenant encore une bride de montage (12,12′) pour le montage étanche de cet élément chauffant à travers une paroi de ladite enceinte, cette bride supportant la partie extrême de l'élément chauffant où sont accessibles les conducteurs (6,8) pour leur raccordement à un réseau électrique, caractérisé en ce que l'autre électrode du circuit de sécurité est constituée par la première enveloppe intérieure métallique (3).

**2.** Elément chauffant selon la revendication 1 caractérisé en ce que la seconde enveloppe extérieure est une enveloppe métallique (9) et elle contient une matière réfractaire isolante électriquement (5) dans laquelle est incluse la première enveloppe métallique intérieure (3).

**3.** Elément chauffant selon la revendication 1, caractérisé en ce que la seconde enveloppe extérieure est une enveloppe en verre (9′) contenant des rondelles isolantes (18) tenant centrée la première enveloppe intérieure métallique (3).

**4.** Elément chauffant selon la revendication 3, caractérisé en ce qu'il comprend un circuit de sécurité supplémentaire (33) ayant deux électrodes dont l'une est la première enveloppe intérieure métallique (3) et l'autre est une électrode (40) incluse dans le volume limité par la bride de montage (12,12′), la première enveloppe intérieure métallique (3) et la seconde enveloppe extérieure (9′).

**5.** Elément chauffant selon la revendication 4, caractérisé en ce que chacun des deux circuits de sécurité (32,33) a pour sa connexion à l'électrode constituée soit par le fil résistant électrique chauffant (4) soit par la première enveloppe intérieure métallique (3) respectivement, un fil conducteur (36,36′) qui est relié aux deux conducteurs d'alimentation (6,8) du fil résistant (4) à l'aide de deux diodes (D1,D2,D1′,D2′), le sens de conduction des diodes (D1,D2) de l'un des circuits de sécurité (32) étant l'inverse de celui des diodes (D1′,D2′) de l'autre circuit de sécurité (33).

**6.** Elément chauffant selon la revendication 4 dont les conducteurs (6,8) d'alimentation électrique du fil résistant chauffant (4) sont alimentés à travers un relais principal monostable (24) commandé par un relais pilote bistable (25) à bouton de MARCHE (26) et d'ARRET (27) et dans lequel un circuit de sécurité comprend un fusible (F) servant à l'alimentation électrique du relais pilote bistable (25), caractérisé en ce que le circuit de sécurité (32) qui a le fil résistant électrique chauffant (4) comme électrode est branché en parallèle au bouton d'ARRET (27) cependant que le circuit de sécurité (33) qui comprend l'électrode (40) incluse dans le volume limité par la bride de montage (12,12′), la première enveloppe intérieure métallique (3) et la seconde enveloppe extérieure (9′) est branché en parallèle sur le fusible (F).

**7.** Elément chauffant selon l'une quelconque des revendications 1 à 3 dont les circuits d'alimentation et de régulation comprennent un triac (42) caractérisé en ce que la bride de montage (12′) est en matière métallique et présente dans son épaisseur un logement (43) dans lequel est installé le triac (42) en relation d'échange thermique avec la matière métallique de cette bride de montage (12′).

**8.** Elément chauffant selon la revendication 7 caractérisé en ce que l'ensemble des circuits électriques et électroniques associés à cet élément chauffant sont groupés, à l'exception du triac (42), dans un boîtier (47) ayant une paroi à surface extérieure (48) contre laquelle est appliquée la face arrière de la bride de montage (12′), avec une ouverture (49) ménagée dans cette paroi pour l'introduction à l'intérieur du boîtier (47) de la partie extrême arrière de l'élément chauffant, une autre paroi du même boîtier (47) ayant une surface extérieure (52) sur laquelle se trouvent les divers moyens de commande et de contrôle nécessaires au fonctionnement de l'élément chauffant.

**Claims**

**1.** A heating element with electronic control, monitoring and regulating circuits for heating a liquid contained in a vessel with a liquid-tight wall, comprising an electrical resistant heating wire (4) connected at its ends to electrical supply conductors (6, 8), a first metal internal casing (3) containing said resistant wire (4) which is enclosed in an electrically insulating refractory material (5) and leaving the conductors (6, 8) accessible at one of its ends, a second external casing (9, 9') having a closed end (9A) and an open end (9B) closed off by a closure means (10, 19) and containing the first metal internal casing (3), a safety circuit (32) with two electrodes for causing an interruption in the electrical power supply to the conductors (6, 8) in the event of inadequate electrical insulation of the heating element, one of said electrodes being formed by the electrical resistant heating wire (4), further comprising a mounting flange (12, 12') for sealingly mounting said heating element through a wall of said vessel, said flange supporting the end portion of the heating element at which the conductors (6, 8) are accessible for connection thereof to an electrical network, characterised in that the other electrode of the safety circuit is formed by the first metal internal casing (3).

**2.** A heating element according to claim 1 characterised in that the second external casing is a metal casing (9) and it contains an electrically insulating refractory material (5) in which the first metal internal casing (3) is enclosed.

3. A heating element according to claim 1 characterised in that the second external casing is a glass casing (9') containing insulating discs (18) holding the first metal internal casing (3) in a centered condition.

4. A heating element according to claim 3 characterised in that it comprises a supplementary safety circuit (33) having two electrodes of which one is the first metal internal casing (3) and the other is an electrode (40) enclosed in the volume defined by the mounting flange (12, 12'), the first metal internal casing (3) and the second external casing (9').

5. A heating element according to claim 4 characterised in that each of the two safety circuits (32, 33) has, for connection thereof to the electrode formed either by the electrical resistant heating wire (4) or by the first metal internal casing (3) respectively, a conductor wire (36, 36') which is connected to the two supply conductors (6, 8) of the resistant wire (4) by means of two diodes (D1, D2, D1', D2'), the forward direction of the diodes (D1, D2) of one of the safety circuits (32) being the reverse to that of the diodes (D1', D2') of the other safety circuit (33).

6. A heating element according to claim 4 wherein the electrical power supply conductors (6, 8) for the resistant heating wire (4) are supplied by way of a main monostable relay (24) controlled by a bistable pilot-control relay (25) with an ON (26) and OFF button (27) and in which a safety circuit comprises a fuse (F) serving for the electrical power supply to the bistable pilot-control relay (25), characterised in that the safety circuit (32) which has the electrical resistant heating wire (4) as the electrode is connected in parallel to the OFF button (27) while the safety circuit (33) which comprises the electrode (40) enclosed in the volume defined by the mounting flange (12, 12'), the first metal internal casing (3) and the second external casing (9') is connected in parallel to the fuse (F).

7. A heating element according to any one of claims 1 to 3 wherein the power supply and regulating circuits comprise a triac (42) characterised in that the mounting flange (12') is of metal material and in its thickness has a housing (43) in which the triac (42) is installed in heat exchange relationship with the metal material of said mounting flange (12').

8. A heating element according to claim 7 characterised in that the assembly of the electrical and electronic circuits associated with said heating element, except for the triac (42), are grouped in a housing (47) having a wall with an external surface (48) against which is applied the rear face of the mounting flange (12'), with an opening (49) provided in said wall for the introduction into the interior of the housing (47) of the rear end portion of the heating element, another wall of the same housing (47) having an external surface (52) on which are disposed the various control and monitoring means required for operation of the heating element.

**Patentansprüche**

1. Heizelement, welches mit elektronischen Schaltkreisen zum Schalten, Steuern und Regeln ausgestattet ist und zum Erwärmen einer in einem Behälter mit dichten Wänden befindlichen Flüssigkeit dient, umfassend einen elektronischen Widerstandsheizdraht (4), welcher mit seinen Enden mit elektrischen Versorgungsleitungen (6, 8) verbunden ist, eine erste, innere Metallhülle (3), welche den in ein elektrisch isolierendes refraktäres Material (5) eingebetteten Widerstandsdraht (4) aufnimmt und die Leitungen (6, 8) an einem Ende zugänglich läßt, eine zweite äußere Hülle (9, 9') mit einem geschlossenen Ende (9A) und einem offenen, mit einem Stopfenelement (10, 19) verstopften Ende (9B), welche die erste, innere Metallhülle (3) aufnimmt, ferner einen Sicherheitsschaltkreis (32) mit zwei Elektroden zum Abschalten der elektrischen Versorgung der Leiter (6, 8) im Falle einer ungenügenden elektrischen Isolierung des Heizelementes, wobei eine dieser Elektroden durch den elektrischen Widerstandsheizdraht (4) gebildet ist, umfassend ferner einen Montagebock (12, 12') für die dichte Durchsteckmontage des Heizelementes in der Wand des genannten Behälters, wobei dieser Bock den Endbereich des Heizelementes hält, an welchem die Leitungen (6, 8) für einen Anschluß an ein elektrisches Versorgungsnetz zugänglich sind, dadurch **gekennzeichnet,** daß die andere Elektrode des Sicherheitsschaltkreises durch die erste, innere Metallhülle (3) gebildet ist.

2. Heizelement nach Anspruch 1, dadurch **ge-**

**kennzeichnet,** daß die zweite, äußere Hülle eine Metallhülle (9) ist und daß sie ein elektrisch isolierendes refraktäres Material (5) enthält, in das die erste, innere Metallhülle (3) eingebettet ist.

3. Heizelement nach Anspruch 1, dadurch **gekennzeichnet,** daß die zweite, äußere Hülle eine Glashülle (9') ist, in welcher isolierende Ringelemente (18) angeordnet sind, die die erste, innere Metallhülle (3) zentriert halten.

4. Heizelement nach Anspruch 3, dadurch **gekennzeichnet,** daß sie einen zusätzlichen Sicherheitschaltkreis (33) mit zwei Elektroden umfaßt, deren eine die erste, innere Metallhülle (3) und deren andere eine Elektrode (40) ist, welche in dem Raum angeordnet ist, der durch den Montagebock (12, 12'), die erste, innere Metallhülle (3) und die zweite, äußere Hülle (9') begrenzt wird.

5. Heizelement nach Anspruch 4, dadurch **gekennzeichnet,** daß jeder der beiden Sicherheitsschaltkreise (32, 33) für seine jeweilige Verbindung mit der aus dem elektrischen Widerstandsheizdraht (4) bzw. aus der ersten, inneren Metallhülle (3) gebildeten Elektrode einen Leitungsdraht (36, 36') hat, der mit den beiden Versorgungsleitungen (6, 8) für den Widerstandsdraht (4) mittels zweier Dioden (D1, D2, D1', D2') verbunden ist, wobei die Durchlaßrichtung der Dioden (D1, D2) eines (32) der Sicherheitsschaltkreise entgegengesetzt zu der der Dioden (D1', D2') des anderen Sicherheitsschaltkreises (33) ist.

6. Heizelement nach Anspruch 4, wobei die elektrischen Versorgungsleitungen (6, 8) für den Widerstandsheizdraht (4) über ein monostabiles Hauptrelais (24) versorgt werden, welches durch ein bistabiles Pilotrelais (25) mit einem EIN-Schaltknopf (26) und einem AUS-Schaltkopf (27) gesteuert wird und wobei ein Sicherheitschaltkreis eine Sicherung (F) für die elektrische Versorgung des bistabilen Pilotrelais (25) aufweist, dadurch **gekennzeichnet,** daß der Sicherheitsschaltkreis (32), welcher als Elektrode den Widerstandsheizdraht (4) hat, parallel zum AUS-Schaltknopf (27) geschaltet ist, während der Sicherheitsschaltkreis (33), welcher die Elektrode (40) aufweist, die in dem durch den Montagebock (12, 12'), die erste, innere Metallhülle (3) und die zweite, äußere Hülle (9') begrenzten Raum angeordnet ist, parallel zur Sicherung (F) geschaltet ist.

7. Heizelement nach einem der Ansprüche 1 bis 3, wobei die Versorgungsschaltkreise und Regelschaltkreise einen Triac (42) umfassen, dadurch **gekennzeichnet,** daß der Montagebock (12') aus Metall besteht und innerhalb seiner Wanddicke eine Ausnehmung (43) hat, in der der Triac (42) in einer mit dem Metallmaterial des Montagebockes (12') wärmeaustauschenden Anordnung untergebracht ist.

8. Heizelement nach Anspruch 7, dadurch **gekennzeichnet,** daß die gesamte, dem Heizelement zugeordnete Anordnung der elektrischen und elektronischen Schaltkreise mit Ausnahme des Triac (42) in einem Gehäuse (47) angeordnet ist, welches eine eine Außenfläche (48) aufweisende Wand hat, gegen die die Rückseite des Montagebockes (12') anliegt, wobei in dieser Wand eine Öffnung (49) zum Einführen des hinteren Endbereiches des Heizelementes ins Innere des Gehäuses (47) ausgebildet ist und wobei eine andere Wand des gleichen Gehäuses (47) eine Außenfläche (52) hat, auf der sich die verschiedenen Schalt- und Steuermittel für den Betrieb des Heizelementes befinden.

Fig.1

Fig.2

*Fig.3*

EP 0 317 435 B1

## Fig. 4